# DEMANDE DE BREVET EUROPEEN

(11) **EP 0 990 618 A1**
(43) Date de publication de la demande: **05.04.2000**
(21) Numéro de dépôt: 99410122.8
(22) Date de dépôt: 04.10.1999
(51) Int. Cl.: B66D 1/30, B66D 1/36, B66D 1/28, B64B 1/50

(54) **Mécanisme d'actionnement équipé d'un treuil à sangles multiples**

(30) Priorité: 02.10.1998 FR 9812526
(71) Demandeur: AIRSTAR - Zône Artisanale de Champ Fila, 38320 Poisat (FR)
(72) Inventeur: Chabert, Pierre, 38400 St. Martin d'Hères (FR)
(74) Mandataire: Hecké, Gérard

(57) **Abrégé**

Un mécanisme d'actionnement comprend un dispositif à treuil 12 rotatif, et une pluralité d'éléments de liaison souples formés par des sangles 14 plates individuelles, lesquelles sont enroulées coaxialement sur elles-mêmes dans une succession de dévidoirs (24) échelonnés à intervalles réguliers le long de la direction axiale du treuil 12. Chaque dévidoir 24 comporte une paire de plateaux 28 et une bague 30 intermédiaire sur laquelle s'enroule la sangle correspondante pour former une bobine annulaire, l'ensemble étant centré sur une douille support 26 cylindrique entraînée en rotation , et autorisant un montage modulaire des dévidoirs 24.

Applications: sustentation de ballons éclairants, commande de volets et rideaux, etc...

## Description

### Domaine technique de l'invention

L'invention est relative à un mécanisme d'actionnement comprenant un dispositif à treuil rotatif, et une pluralité d'éléments de liaison individuels destinés à être reliés à des points d'attache pour la manipulation ou la manoeuvre d'un appareil ou d'un équipement, les éléments de liaison étant formés par des liens souples enroulés coaxialement dans une succession de dévidoirs échelonnés à intervalles réguliers le long de la direction axiale du treuil, chaque dévidoir comprenant une paire de plateaux et une bague intermédiaire sur laquelle s'enroule le lien correspondant pour former une bobine annulaire, les bagues des différents dévidoirs successifs présentant les mêmes diamètres pour obtenir les mêmes vitesses de défilement des liens lors du mouvement de rotation des plateaux.

### Etat de la technique antérieure

Un tel dispositif est décrit dans le document US 3135478, lequel se rapporte à un mécanisme d'actionnement comprenant un dispositif à treuil rotatif, et une pluralité d'éléments de liaison individuels destinés à être reliés à des points d'attache pour la manipulation ou la manoeuvre d'un appareil ou d'un équipement, les éléments de liaison étant formés par des liens souples de sections cylindriques, enroulés coaxialement dans une succession de dévidoirs échelonnés à intervalles réguliers le long de la direction axiale du treuil. Chaque dévidoir comprend une paire de plateaux et une bague intermédiaire sur laquelle s'enroule le lien correspondant pour former une bobine annulaire, les bagues des différents dévidoirs successifs présentant les mêmes diamètres pour obtenir les mêmes vitesses de défilement des liens lors du mouvement de rotation des plateaux.

D'autres treuils existants comportent généralement un tambour rotatif horizontal sur lequel une cordelette ou un câble attaché par son extrémité à une charge. L'entraînement en rotation du tambour s'effectue par l'intermédiaire d'un réducteur de vitesse, et le câble s'enroule en formant une juxtaposition de spires jointives de mêmes diamètres, réparties le long du tambour cylindrique. ll est également possible d'utiliser deux câbles ou cordelettes qui s'enroulent simultanément sur le même tambour. Outre le problème de l'encombrement du tambour, on a constaté que les mouvements d'enroulement et de déroulement des câbles n'étaient pas réguliers, entraînant des variations de longueurs jusqu'aux points d'attache. ll en résulte des mouvements irréguliers d'inclinaison de la charge lors des opérations de levage ou de descente.

### Objet de l'invention

L'objet de l'invention consiste à réaliser un mécanisme d'actionnement à treuil équipé de sangles multiples à vitesse de défilement uniforme, et facilitant un montage modulaire des dévidoirs.

Le mécanisme selon l'invention est caractérisé en ce que le dispositif à treuil comporte de plus :
- une douille support cylindrique entraînée en rotation , et autorisant un montage modulaire des dévidoirs,
- des liens souples conformés selon des sangles plates,
- un orifice central ménagé dans chaque plateau, et aligné avec l'orifice de la bague intermédiaire, pour autoriser le montage axial sur la douille support,
- des vis de fixation traversant des trous respectifs des plateaux et des bagues pour l'assemblage des dévidoirs,
- et un épaulement annulaire prévu sur la douille support, et comprenant le même nombre de trous que ceux des plateaux pour solidariser les différents dévidoirs à la douille support.

Selon une caractéristique de l'invention, chaque bague circulaire entre deux plateaux successifs comporte un méplat disposé en regard de l'une des vis de fixation, laquelle sert d'organe d'accrochage à une boucle d'extrémité de la sangle correspondante, indépendamment du sens de rotation du treuil.

Selon une autre caractéristique de l'invention, les sangles à la sortie du treuil sont guidées par des organes d'orientation en direction des points d'attache de l'équipement. Les organes d'orientation comportent avantageusement des boutons rotatifs à fentes, montés à roulement libre dans les logements circulaires ménagés dans des profilés.

L'équipement est formé à titre d'exemple par un ballon éclairant ayant une enveloppe remplie de gaz de faible densité. Les sangles de sustentation se déroulent et s'enroulent de façon régulière grâce au treuil selon l'invention. L'ampoule d'éclairage du ballon est alimentée au moyen d'un câble électrique plat, destiné à s'enrouler ou se dérouler dans un dévidoir additionnel du treuil. Le câble électrique est en liaison avec un dispositif à contact rotatif logé à l'intérieur d'un joint tournant monté coaxialement sur l'arbre d'entraînement. Le treuil est logé avantageusement à l'intérieur d'un caisson servant également de volume de rangement du ballon à l'état dégonflé.

### Description sommaire des dessins

D'autres avantages et caractéristiques ressortiront plus clairement de la description qui va suivre d'un mode de réalisation de l'invention, donnée à titre d'exemple non limitatif et représenté aux dessins annexés dans lesquels :
- la figure 1 est une vue éclatée en perspective du mécanisme d'actionnement à treuil selon l'invention ;
- la figure 2 est une vue en plan du mécanisme d'actionnement en position montée du treuil,
- figure 3 montre une vue en perspective du mécanisme d'actionnement associé à un dispositif de guidage des sangles ;
- la figure 4 représente le mécanisme d'actionnement de la figure 3 vu sous un autre angle ;
- la figure 5 est une vue schématique en perspective de l'empilage des bagues du treuil, les plateaux n'étant pas représentés;
- la figure 6 montre une vue de détail en perspective , et à échelle agrandie de l'assemblage d'un plateau et de la bague associée sur la douille support du treuil ;
- les figures 7 et 8 illustrent deux exemples de réalisation du mécanisme d'actionnement pour un ballon éclairant gonflé à l'hélium ;
- la figure 9 montre une variante de réalisation du mécanisme d'actionnement de sangles de retenue et d'un câble électrique d'alimentation.

### Description d'un mode de réalisation préférentiel

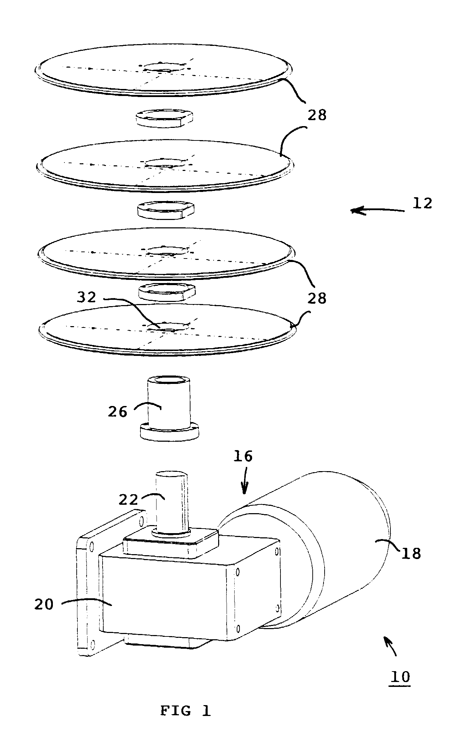

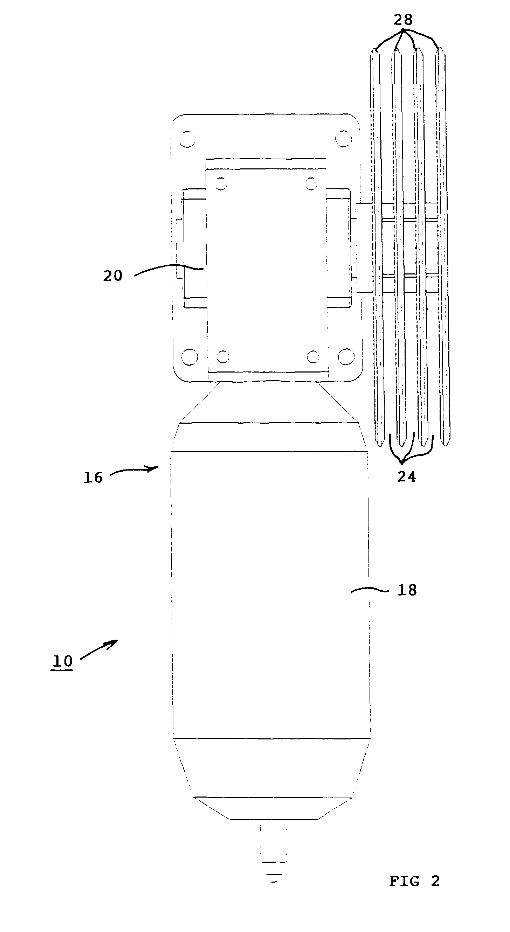

En référence aux figures 1 à 6, un mécanisme d'actionnement 10 comporte un treuil 12 équipé d'une pluralité de sangles 14 de liaison individuelles destinées à être reliées à des points d'attache d'un appareil ou équipement (non représenté). Le treuil 12 est entraîné en rotation par un motoréducteur 16 comprenant un moteur électrique 18 et un réducteur de vitesse 20, ce dernier ayant un arbre d'entraînement 22 accouplé mécaniquement au treuil 12. La vitesse de rotation du moteur 18 peut être ajustée au moyen d'un circuit de commande ( non représenté) piloté localement ou à distance.

Les sangles 14 sont formées par des bandes plates souples en matériau synthétique de résistance mécanique élevée, et présentent des dimensions identiques, la largeur étant nettement supérieure à l'épaisseur.

Le treuil 12 est agencé selon une structure modulaire composée d'une succession de dévidoirs 24 échelonnés à intervalles réguliers le long de la direction axiale de l'arbre 22. Le treuil 12 est entraîné en rotation au moyen d'une douille support 26, laquelle est emmanchée coaxialement sur l'arbre d'entraînement 22, et ayant une surface latérale cylindrique destinée à centrer des plateaux 28 circulaires séparés les uns des autres par des bagues 30 intermédiaires.

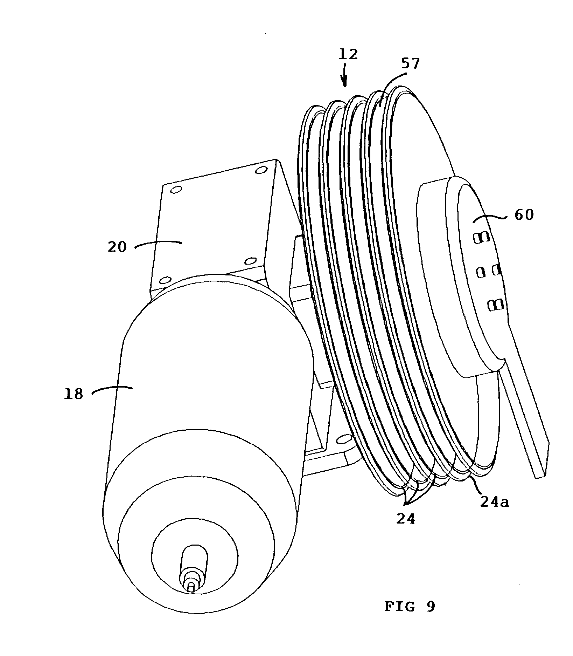

Quatre plateaux 28 et trois bagues 30 seront assemblés sur la douille support 26 pour la formation de trois dévidoirs 24 destinés à trois sangles 14. ll suffit de rapporter en plus un plateau et une bague sur la douille support 26, pour obtenir un quatrième dévidoir 24a (figure 9), et ainsi de suite pour chaque dévidoir supplémentaire.

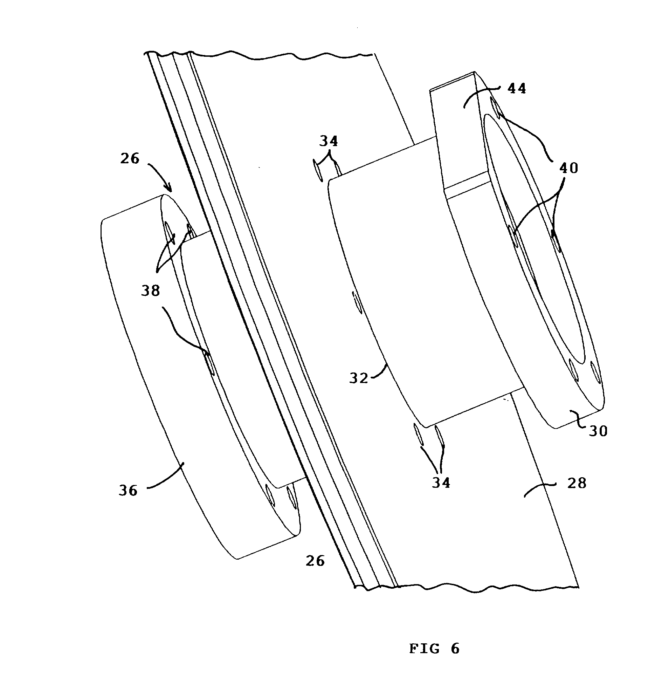

Sur la figure 6, chaque plateau 28 comporte un orifice 32 circulaire ayant un diamètre légèrement supérieur à celui de la douille support 26, et une pluralité de trous 34 angulairement répartis autour de l'orifice 32. Un épaulement 36 de la douille support 26 est pourvu du même nombre de trous 38, en alignement axial avec les trous 34, 40 ménagés respectivement dans les plateaux 28 et les bagues 30.

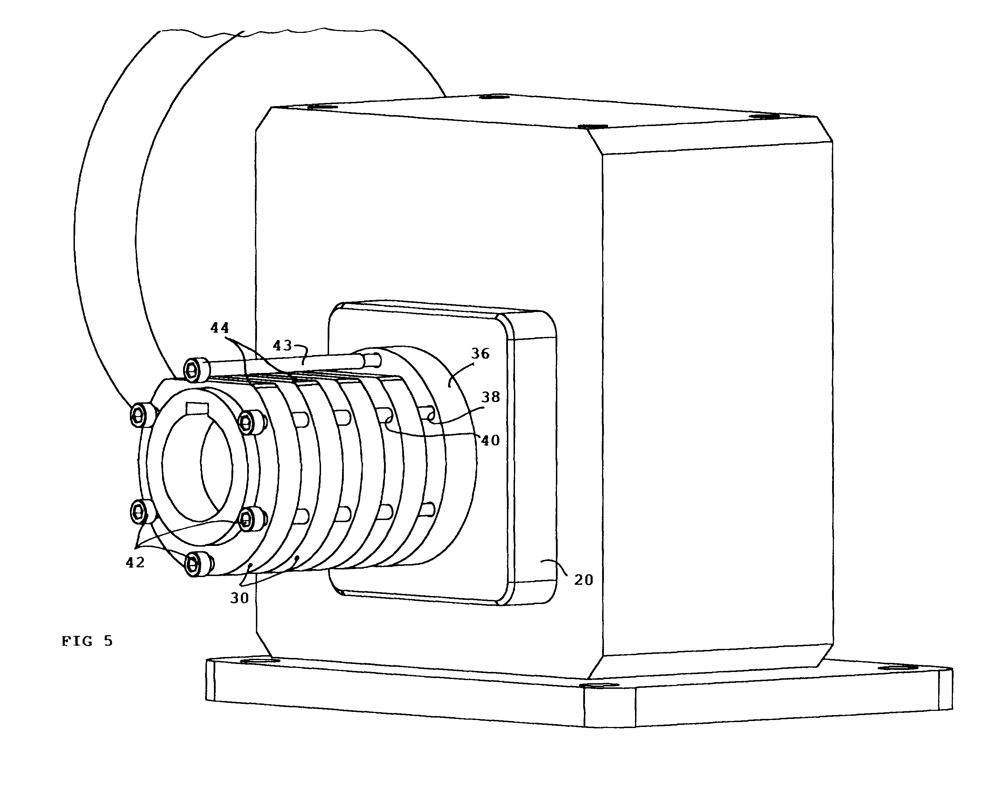

Des vis d'assemblage 42, 43 ( figure 5) traversent les différents trous 34, 38, 40 pour solidariser les plateaux 28 élémentaires sur la douille support 26 de manière à former les différents dévidoirs 24 des sangles 14. Chaque bague 30 circulaire entre deux plateaux 28 successifs d'un dévidoir 24, comprend un méplat 44 disposé en regard de la vis 43 supérieure, laquelle sert d'organe d'accrochage à une boucle d'extrémité de la sangle 14 correspondante. Un tel montage permet un enroulement de la sangle dans un sens ou dans l'autre sans risque de décrochage. L'écartement des plateaux 28 est sensiblement supérieur à la largeur de la sangle 14, et autorise un enroulement axial sur elle-même de la sangle 14 avec formation d'une bobine annulaire, indépendamment du sens de rotation du treuil 12.

Les bagues 30 ont des diamètres identiques, permettant les mêmes vitesses de défilement pour toutes les sangles 14 lors du mouvement de rotation des plateaux 28.

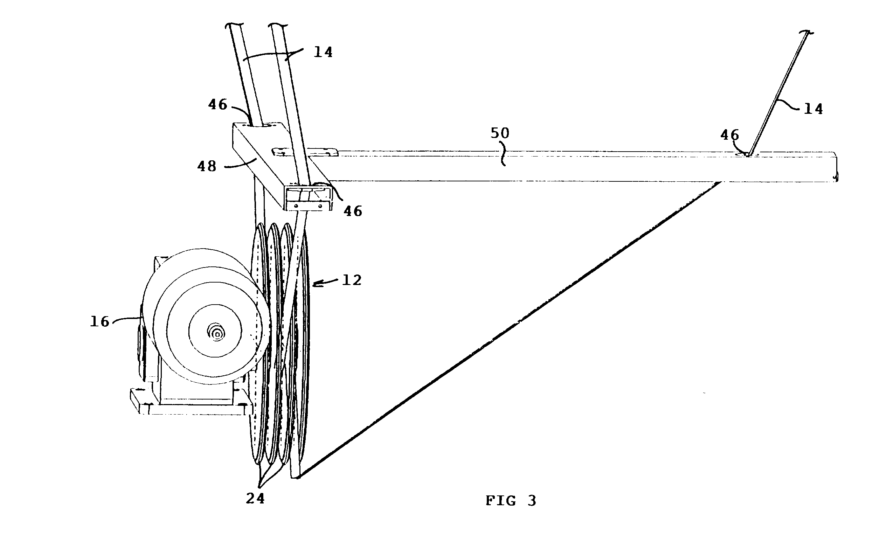

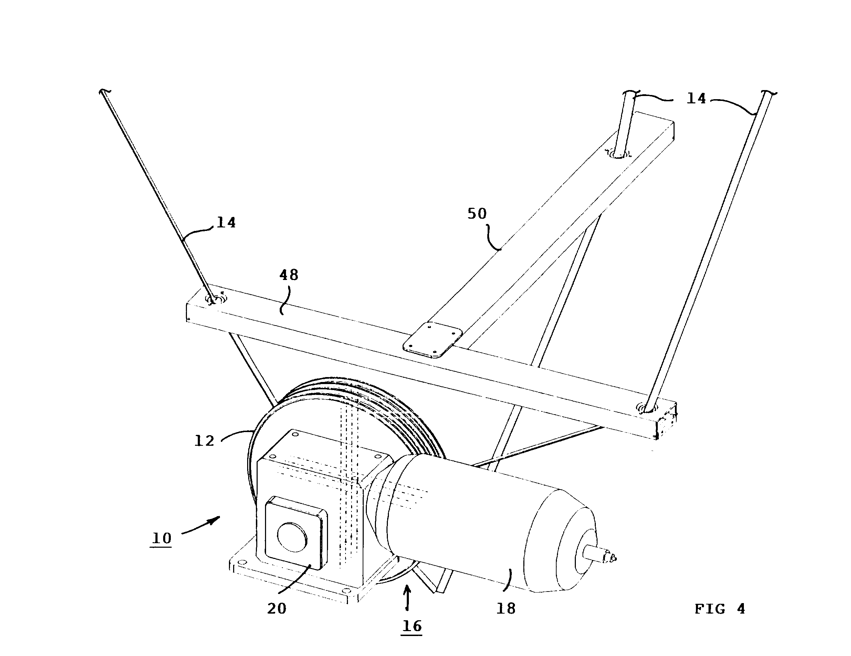

Les trois sangles 14 des figures 3 et 4 se trouvent dans trois plans parallèles au niveau des dévidoirs 24 successifs du treuil 12, et sont ensuite guidées par des organes d'orientation 46, lesquels sont ménagés aux extrémités de deux profilés 48, 50 disposés selon un T dans un plan horizontal. L'un des profilés 48 s'étend parallèlement au-dessus des plateaux 28, et l'autre profilé 50 est perpendiculaire au milieu du profilé 48, et s'étend le long de la direction axiale de l'arbre de sortie 22. Les organes d'orientation 46 comportent à titre d'exemple, des boutons rotatifs à fentes, lesquels sont montés à roulement libre dans des logements circulaires des profilés 48, 50.

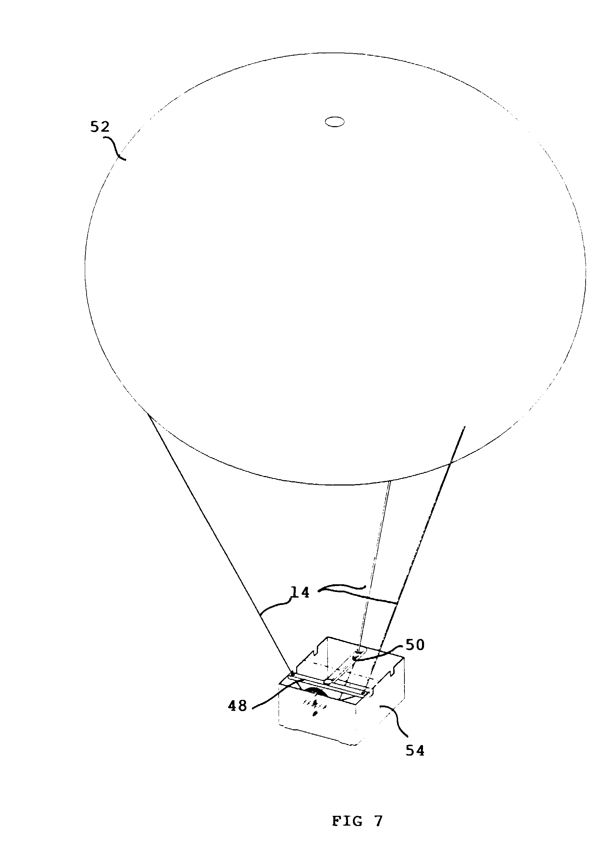

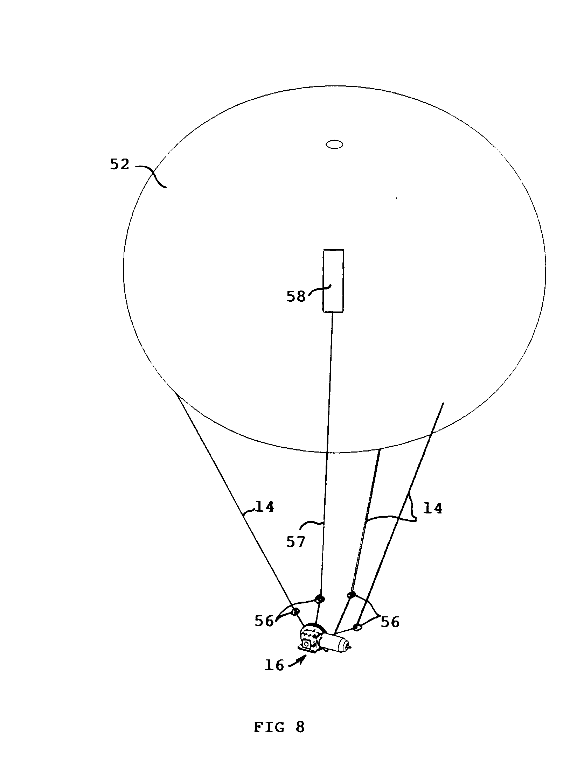

L'équipement selon les figures 7 et 8 est constitué par un ballon éclairant 52 gonflé par de l'hélium ou tout autre gaz de faible densité. Les sangles 14 servent à la sustentation du ballon 52. Sur la figure 7, les deux profilés 48, 50 et le treuil 12 à motoréducteur 16 sont logés à l'intérieur d'un caisson 54, lequel sert également pour le rangement du ballon 52 à l'état dégonflé. Le caisson 54 peut être fixé sur un châssis à roues pour constituer une remorque. Un ou plusieurs profilés additionnels peuvent être utilisés en fonction du nombre de dévidoirs 24 et de sangles 14.

La rotation du treuil 12 dans un sens prédéterminé provoque le déroulement simultané des trois sangles 14 de liaison autorisant la montée régulière du ballon 52, même en présence d'un vent latéral. Le sens de rotation du treuil 12 est inversé pour la descente du ballon 52, et les sangles 14 s'enroulent coaxialement dans les dévidoirs 24 respectifs.

Sur la figure 8, le caisson 54 et les profilés 48, 50 sont supprimés, et le treuil 12 à motoréducteur 16 est installé en fixe en un endroit prédéterminé, le guidage des sangles 14 s'effectuant au moyen de poulies de renvoi 56.

Sur la figure 9, le treuil 12 comporte un quatrième dévidoir 24a extérieur, destiné à l'enroulement d'un câble plat électrique 57, lequel est utilisé pour l'alimentation de l'ampoule 58 du ballon 52 de la figure 8. Le montage de l'ampoule 58 est par exemple du type décrit dans le document FR-A-2719228 de la demanderesse. Les mouvements de déroulement et d'enroulement du câble plat 57 s'effectuent en même temps que ceux des sangles 14. L'autre extrémité du câble électrique 57 est alimenté en permanence par un dispositif à contact rotatif logé à l'intérieur d'un joint tournant 60 monté coaxialement sur l'arbre 22, et connecté à une source de tension.

ll est clair que le treuil 12 selon l'invention peut être actionné manuellement à la place du motoréducteur 16, par exemple au moyen d'une commande de secours.

Le mécanisme d'actionnement 10 décrit en référence aux figures 1 à 6, peut être utilisé pour d'autres applications de manipulations, notamment pour la commande centralisée de relevage ou d'abaissement de rideaux ou de volets.

## Revendications

1. Mécanisme d'actionnement comprenant un dispositif à treuil (12) rotatif, et une pluralité d'éléments de liaison individuels destinés à être reliés à des points d'attache pour la manipulation ou la manoeuvre d'un appareil ou d'un équipement, les éléments de liaison étant formés par des liens souples enroulés coaxialement dans une succession de dévidoirs (24) échelonnés à intervalles réguliers le long de la direction axiale du treuil (12), chaque dévidoir (24) comprenant une paire de plateaux (28) et une bague (30) intermédiaire sur laquelle s'enroule le lien correspondant pour former une bobine annulaire, les bagues (30) des différents dévidoirs (24) successifs présentant les mêmes diamètres pour obtenir les mêmes vitesses de défilement des liens lors du mouvement de rotation des plateaux (28),
caractérisé en ce que le dispositif à treuil (12) comporte de plus :
- une douille support (26) cylindrique entraînée en rotation , et autorisant un montage modulaire des dévidoirs (24),
- des liens souples conformés selon des sangles (14) plates,
- un orifice (32) central ménagé dans chaque plateau (28), et aligné avec l'orifice de la bague (30) intermédiaire, pour autoriser le montage axial sur la douille support (26),
- des vis de fixation (42, 43) traversant des trous (34, 40) respectifs des plateaux (28) et des bagues (30) pour l'assemblage des dévidoirs (24),
- et un épaulement (36) annulaire prévu sur la douille support (26), et comprenant le même nombre de trous (38) que ceux des plateaux (28) pour solidariser les différents dévidoirs à la douille support (26).

2. Mécanisme d'actionnement selon la revendication 1, caractérisé en ce que chaque bague (30) circulaire entre deux plateaux (28) successifs comporte un méplat (44) disposé en regard de l'une des vis de fixation (43), laquelle sert d'organe d'accrochage à une boucle d'extrémité de la sangle (14) correspondante, indépendamment du sens de rotation du treuil (12).

3. Mécanisme d'actionnement selon la revendication 1, caractérisé en ce que les sangles (14) à la sortie du treuil (12) sont guidées par des organes d'orientation (46) en direction des points d'attache de l'équipement.

4. Mécanisme d'actionnement selon la revendication 3, caractérisé en ce que les organes d'orientation (46) comportent des boutons rotatifs à fentes, montés à roulement libre dans les logements circulaires ménagés dans des profilés (48, 50).

5. Mécanisme d'actionnement selon la revendication 3, caractérisé en ce que les organes d'orientation (46) sont formés par des poulies de renvoi (56).

6. Mécanisme d'actionnement selon la revendication 1, caractérisé en ce que le treuil (12) est équipé d'un organe de manoeuvre manuel.

7. Mécanisme d'actionnement selon la revendication 1, caractérisé en ce que le treuil (12) est entraîné en rotation par un motoréducteur (16), ayant un arbre d'entraînement (22) emmanché coaxialement dans la douille support (26).

8. Mécanisme d'actionnement selon la revendication 1, dans lequel l'équipement est formé par un ballon éclairant (52), ayant une enveloppe remplie de gaz de faible densité, et renfermant une ampoule (58) électrique d'éclairage, caractérisé en ce que l'ampoule (58) est alimentée au moyen d'un câble électrique (57) plat, destiné à s'enrouler ou se dérouler dans un dévidoir (24a) additionnel du treuil (12).

9. Mécanisme d'actionnement selon la revendication 8, caractérisé en ce que le câble électrique (57) est alimenté en permanence par un dispositif à contact rotatif logé à l'intérieur d'un joint tournant (60) monté coaxialement sur l'arbre 22 d'entraînement.

10. Mécanisme d'actionnement selon la revendication 8, caractérisé en ce que le treuil (12) est logé à l'intérieur d'un caisson (54) servant également de volume de rangement du ballon (52) à l'état dégonflé.
